# EUROPÄISCHE PATENTSCHRIFT

(11) **EP 2 110 198 B1**
(45) Veröffentlichungstag und Bekanntmachung des Hinweises auf die Patenterteilung: **17.08.2011**
(21) Anmeldenummer: 09157102.6
(22) Anmeldetag: 01.04.2009
(51) Int. Cl.: B23K 26/42, B26F 3/00, F16B 19/10, H05H 1/34

(54) **Schneidstrahlmaschine mit einem Bearbeitungskopf und einer auf diesem angeordneten Kupplung für eine Düse**
Cutting beam machine with a working head and arranged thereon, a coupling for a nozzle
Machine de coupage par faisceau avec une tête de travail et un couplage arrangé sur celle-ci pour une buse

(30) Priorität: 09.04.2008 EP 08405102
(43) Veröffentlichungstag der Anmeldung: 21.10.2009
(73) Patentinhaber: Bystronic Laser AG, CH-3362 Niederönz (CH)
(72) Erfinder: Plüss, Christoph, 3400 Burgdorf (CH); Aerni, Dominic, 3362 Niederönz (CH)
(74) Vertreter: Rosenich, Paul

(56) Entgegenhaltungen:
- EP-A1- 0 312 861
- DE-A1-102007 024 366

## Beschreibung

Die Erfindung betrifft eine Schneidstrahlmaschine, insbesondere einer Laserbearbeitungsmaschine.

Das Dokument EP0 312 861 A1 offenbart eine solche Schneidstrahlmaschine.

Laserbearbeitungsmaschinen sind Werkzeugmaschinen, die mit Hilfe eines hochenergetischen Laserstrahls Materialien bearbeiten. Das Anwendungsgebiet umfasst eine Vielzahl an Fertigungsverfahren wie Trennen, Ändern von Stoffeigenschaften oder Urformen. Im Detail werden Laserbearbeitungsmaschinen zum Schneiden, Gravieren, Schweissen, Wärmebehandeln, Randschichthärten und Beschichten, sowie für volumenaufbauende Verfahren eingesetzt. Unter Schneidstrahlmaschine ist hingegen jegliche der genannten Maschinen zu verstehen, aber auch Wasserstrahlschneidmaschinen, Plasmastrahlschneidmaschinen o.dgl.

Das Spektrum der bearbeitbaren Werkstoffe umfasst alle Metalle, Kunststoffe, Glas, Keramik, Stein, Holz, Textilien und Papier. Häufig wird gleichzeitig zu der Einwirkung des Laserstrahls auch ein Schneidgas auf die Bearbeitungsstelle geblasen, um die Bearbeitung zu verbessern.

Verschiedenste Prozessparameter, wie zum Beispiel unterschiedliche Werkstoffe, Blechdicken, Vorschubgeschwindigkeiten und dergleichen, bedingen, dass nicht eine einzige Düse, durch die der Laserstrahl und das Schneidgas tritt, optimal für alle möglichen Parameterkombinationen geeignet ist. Aus diesem Grund werden alternativ verschiedene Düsen eingesetzt, die je nach Bedarf auf dem Laserbearbeitungskopf angebracht werden.

Um die Flexibilität zu steigern, beziehungsweise Rüstzeiten möglichst kurz zu halten, wurden für derartige Laserbearbeitungsmaschinen Düsenkupplungen entwickelt, die einen raschen Wechsel der Düse, häufig werkzeuglos, ermöglichen. Oft erfolgt der Düsenwechsel auch automatisch, also ohne Eingriff eines Operators. Eine Düsenkupplung sollte daher gegebenenfalls auch für einen möglichst reibungsfreien Ablauf beim automatischen Düsenwechsel gestaltet sein.

Beispielsweise offenbart die US 7,129,441 zu dieser Thematik eine Düse für einen Laserbearbeitungskopf, welche durch radial angeordnete Kugeln arretiert wird. Zum Lösen der Düse wird eine Hülse verschoben, sodass sich die Kugeln radial nach aussen bewegen können und so die Düse freigeben.

DE 10 2007 050 878 A1 zeigt weiterhin eine Schnellwechselvorrichtung für einer Laserdüse. Dabei wird die Düse mit einer Hülse, welche mit dem Laserbearbeitungskopf einen Bajonett-Verschluss bildet, am Laserbearbeitungskopf fixiert.

Die DE 201 14 990 U1 offenbart darüber hinaus eine einschraubbare Laserdüse, die mit Hilfe einer Feder gegen Herausfallen gesichert ist.

Schliesslich zeigt die JP 11221691 eine Düse, die mit Hilfe einer aussen anliegenden Spannhülse montiert und deren Durchmesser mit Hilfe dieser Spannhülse variiert werden kann.

Nachteilig an den bekannten Kupplungen ist der zum Teil komplizierte Betätigungsmechanismus, beziehungsweise auch die Tatsache, dass bei den bekannten Bauformen (etwa der US 7,129,441) konstruktiv vorgesehen werden muss, dass Verriegelungselemente beim Kuppelvorgang - und zwar sowohl beim Einkuppeln wie auch beim Auskuppeln - durch die Düse nach aussen gedrückt werden. Dies schränkt den konstruktiven Spielraum für die Düse ein und kann überdies dazu führen, dass die Düse - z.B. im Falle von Verunreinigungen - in der Düsenaufnahme stecken bleibt und/oder nur schwer in die Düsenaufnahme eingeschoben werden kann.

Die der vorliegenden Erfindung zugrunde liegende Aufgabe besteht nun darin, eine verbesserte Düsenkupplung anzugeben.

Erfindungsgemäss wird diese Aufgabe durch eine Schneidstrahmaschine mit einem Bearbeitungskopf und einer auf diesem angeordneden Kupplung gemäß dem Patentanspruchs 1 gelöst.

Demgemäss ist bei einer Kupplung der eingangs genannten Art vorgesehen, dass die Hülse bei Verschiebung entlang der Achse der Düsenaufnahme in eine Entriegelrichtung eine Verschiebung der Verriegelungselemente nach aussen bewirkt.

Die Erfindung erhöht damit den konstruktiven Spielraum für die Düse, da nicht mehr sichergestellt werden muss, dass diese die Verriegelungselemente in die Entriegelposition drückt. Durch das aktive Bewegen der Verriegelungselemente in die Entriegelposition mittels der Hülse wird überdies einem ungewollten Steckenbleiben der Düse vorgebeugt. Weiterhin kann ein aktives Verschieben der Verriegelungselemente in die Entriegelposition dazu beitragen, dass die Düse leichter in die Düsenaufnahme eingeschoben werden kann. Durch die Erfindung wird die Verschiebung der Verriegelungselemente durch die Hülse also bewirkt und nicht wie im Stand der Technik bloss ermöglicht. Die Erfindung überwindet die Nachteile des Standes der Technik somit in vorteilhafter Weise und stellt dazu noch einen einfachen Betätigungsmechanismus für das Ein- und Auskuppeln der Düse zur Verfügung. Die Erfindung liefert damit einen wertvollen Beitrag zur Reduktion von Stillstandszeiten von Laserbearbeitungsmaschinen, da der Düsenwechsel gleichermassen rasch wie sicher erfolgen kann.

Vorteilhafte Ausgestaltungen und Weiterbildungen der Erfindung ergeben sich aus den Unteransprüchen sowie aus der Beschreibung in Zusammenschau mit den Figuren der Zeichnung.

Vorteilhaft ist es, wenn die Schlitze von der Innenseite der Düsenaufnahme zu deren Aussenseite in Entriegelrichtung verlaufen. Auf diese Weise kann ein relativ einfacher Betätigungsmechanismus aufgebaut werden, denn eine axiale Verschiebung der Hülse in Entriegelrichtung bewirkt durch die Neigung der Schlitze in der Düsenaufnahme gleichzeitig eine radiale, nach aussen gerichtete Bewegung der Verriegelungselemente.

Vorteilhaft ist es weiterhin, wenn die Entriegelrichtung entgegengesetzt zur Entnahmerichtung der Düse ist. Dies ist beispielweise dann von besonderem Vorteil, wenn die Laserbearbeitungsmaschine für den automatischen Düsenwechsel vorgesehen ist. Fährt die Maschine die Düse z.B. in eine rohrförmige Vertiefung, dann führt der Kontakt der Hülse mit dem Rand der Vertiefung bei Weiterbewegung des Laserbearbeitungskopfes dazu, dass die Hülse gegen die Entnahmerichtung (also in aller Regel nach oben) geschoben wird und so eine Verschiebung der Verriegelungselemente nach aussen bewirkt. Selbstverständlich ist diese Bauart aber auch für den manuellen Wechsel einsetzbar.

Vorteilhaft ist es aber auch, wenn die Entriegelrichtung gleich der Entnahmerichtung der Düse ist. Unter Umständen kann es für einen Operator der Laserbearbeitungsmaschine leichter sein, die Hülse in Entnahmerichtung (also in aller Regel nach unten) zu schieben. Diese Bauart ist daher gut für den manuellen Wechsel geeignet. Selbstverständlich ist aber auch diese Variante der Erfindung prinzipiell für den automatischen Düsenwechsel geeignet, etwa wenn eine Zange die Hülse greift und in die Entnahmerichtung der Düse zieht.

Besonders vorteilhaft ist es, wenn als Verriegelungselemente Bolzen vorgesehen sind. Bolzen sind leicht herzustellen und neigen wegen ihrer zylindrischen Form auch nicht zum Verkanten in den Schlitzen der Düsenaufnahme. Durch die längliche Bauart kann überdies leicht gewährleistet werden, dass die Verriegelungselemente in der Verriegelungsposition über die Innen und die Aussenseite der Düsenaufnahme hinausragen, auch wenn letztere eine relativ grosse Wandstärke aufweisen sollte. Selbstverständlich kommen aber prinzipiell auch andere Formen als Verriegelungselemente in Betracht. Als Beispiele seien hier Kugeln oder Klötzchen, also quaderförmige Bauteile, genannt. Entscheiden ist, dass sie im Vergleich zum Stand der Technik aktiv betätigbar sind.

An dieser Stelle wird darauf hingewiesen, dass die Verwendung der genannten Bolzen für eine Düsenkupplung auch unabhängig von den im Anspruch 1 angegebenen Merkmalen - etwa in Verbindung mit an sich bekannten Düsenkupplungen - vorteilhaft sein kann und somit auch den Gegenstand einer unabhängigen Erfindung bilden kann.

Besonders vorteilhaft ist es weiterhin, wenn die Verriegelungselemente mittels Feder in Richtung Verriegelungsposition gedrückt werden. Diese Bauart sichert die Düse besonders gut gegen Herausfallen, denn die Verriegelungselemente streben dann stets ihrer Verriegelposition zu und fixieren die Düse rasch und sicher in der Düsenkupplung.

Schliesslich ist es besonders vorteilhaft, wenn die Verriegelungselemente mit den Seitenflächen der Schlitze und einer Nut in der Düse derart zusammenwirken, dass die Düse durch Selbsthemmung gegen Herausfallen gesichert ist. Selbsthemmung beschreibt in der Mechanik den durch Reibung verursachten Widerstand gegen ein Verrutschen oder ein Verdrehen zweier aneinander liegender Körper. Sobald die Haftreibung überschritten ist, sind die Körper nicht mehr selbsthemmend. Um Selbsthemmung zu erreichen, muss konstruktiv vorgesehen werden, dass die Richtung der Kraft zwischen zwei Körpern stets innerhalb des sogenannten "Reibungswinkels" bleibt. Liegen zwei feste Körper an einer ebenen Fläche aufeinander, so ist der Reibungswinkel der Winkel der resultierenden Kraft aus Horizontalkraft und Vertikalkraft, die zwischen den beiden Körpern wirken, ohne dass sie ins Rutschen geraten. Die Horizontalkraft, die in Richtung der ebenen Fläche wirkt, versucht, den oberen Körper wegzuschieben. Die Vertikalkraft, die senkrecht auf die Fläche wirkt, drückt beide Körper aneinander und verhindert durch Erzeugen einer Reibkraft das Wegrutschen. Je glatter die Fläche ist, desto kleiner ist der Reibungswinkel und desto geringer ist die mögliche Horizontalkraft. Die Selbsthemmung wird also beispielsweise durch die Oberflächenrauigkeit der Auflageflächen, der Werkstoffpaarung und durch den Schmierstoff beeinflusst. Vorteilhaft an dieser Variante ist, dass keine komplizierten Massnahmen getroffen werden müssen, um die Düse in der Düsenkupplung zu halten. Auch für Kupplungen, bei denen eine Feder die Verriegelungselemente in die Verriegelposition drückt, kann eine solche Massnahme sinnvoll sein, denn die Feder könnte brechen oder stecken bleiben, sodass dann die Selbsthemmung immer noch für einen sicheren Halt der Düse in der Kupplung sorgt.

Schliesslich wird angemerkt, dass sich die Erfindung prinzipiell nicht nur für Laserbearbeitungsmaschinen, sondern beispielsweise auch für Brennschneidemaschinen und Plasmaschneidmaschinen eignet.

Die obigen Ausgestaltungen und Weiterbildungen der Erfindung lassen sich auf beliebige Art und Weise kombinieren.

Die vorliegende Erfindung wird nachfolgend anhand der in den schematischen Figuren der Zeichnung angegebenen Ausführungsbeispiele näher erläutert. Es zeigen dabei:
- Fig. 1: einen Längsschnitt durch einen Teil eines schematisch dargestellten Laserbearbeitungskopfes;
- Fig. 2a: einen Querschnitt durch Düse und Düsenaufnahme einer ersten schematisch dargestellten Ausführungsform;
- Fig. 2b: einen Querschnitt durch Düse und Düsenaufnahme einer zweiten schematisch dargestellten Ausführungsform.

In den Figuren der Zeichnung sind gleiche und ähnliche Teile mit gleichen Bezugszeichen und funktionsähnliche Elemente und Merkmale - sofern nichts Anderes ausgeführt ist - mit gleichen Bezugszeichen aber unterschiedlichen Indizes versehen.

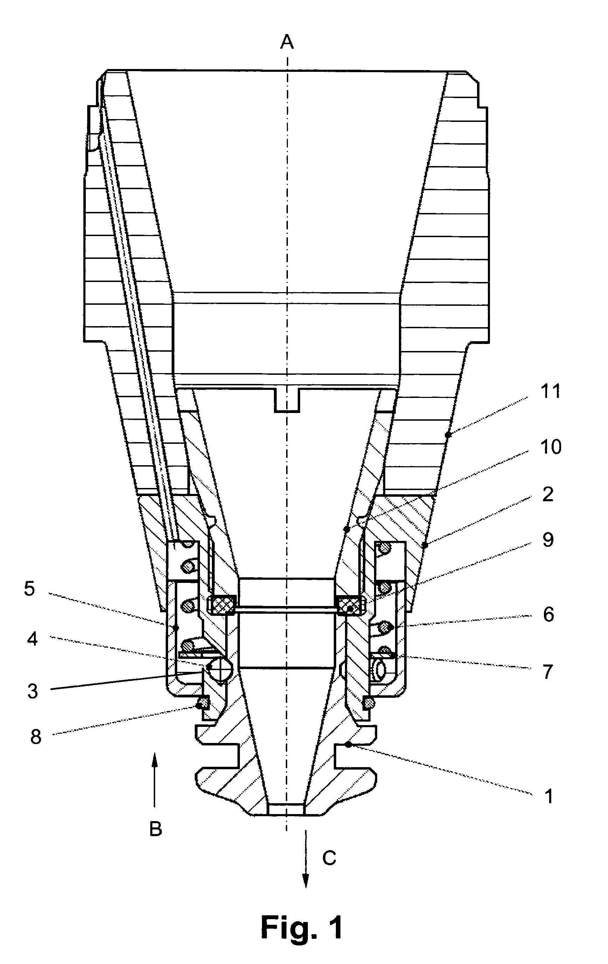

Figur 1 zeigt einen Längsschnitt durch einen Teil eines schematisch dargestellten Laserbearbeitungskopfes mit einer rohrförmigen Düsenaufnahme 2. Es ist zwar vorteilhaft, wenn die Düsenaufnahme 2 einen kreisförmigen oder ovale Querschnitt aufweist, prinzipiell sind aber auch andere Querschnitte denkbar, beispielsweise quadratische Rohrquerschnitte.

Die Düsenaufnahme 2 weist in Bezug zur Achse A der rohrförmigen Düsenaufnahme 2 schräg angeordnete Schlitze 3 auf. Die Schlitze 3 verbinden die Aussenseite der Düsenaufnahme 2 mit deren Innenseite, die zur Aufnahme der Düse 1 vorgesehen ist. In der gezeigten Variante verlaufen die Schlitze 3 von der Innenseite der Düsenaufnahme 2 zu dessen Aussenseite in Entriegelrichtung B, also in der dargestellten Lage des Laserbearbeitungskopfes von innen unten nach aussen oben.

In den Schlitzen 3 sind beweglich gelagerte Verriegelungselemente 4 (hier zylindrische Bolzen) zwischen einer Verriegelposition und einer Entriegelposition verschiebbar und ragen in der Verriegelposition sowohl über die Innenseite als auch die Aussenseite der Düsenaufnahme 2 hinaus. In der Verriegelposition halten die Verriegelelemente 4 eine Düse 1 in der Düsenaufnahme 2.

Aussen an der Düsenaufnahme 2 ist eine Hülse 5 angeordnet, welche mit den Verriegelungselementen 4 in Eingriff gebracht werden kann. Zusätzlich werden die Verriegelungselemente 4 mittels Feder 6 in Richtung Verriegelungsposition gedrückt. Dies ist zwar vorteilhaft aber keinesfalls zwingend nötig. Eine Scheibe 7 sorgt dabei für eine gleichmässige Kraftübertragung zwischen der Feder 6 und den Verriegelungselementen 4. Obwohl im gezeigten Beispiel eine Druckfeder verwendet wird, ist prinzipiell auch der Einsatz einer Zugfeder denkbar. Die Kupplung ist dann konstruktiv adaptierbar ohne den Erfindungsbereich zu verlassen.

Im gezeigten Beispiel wirken die Verriegelungselemente 4 mit den Seitenflächen der Schlitze 3 und einer Nut in der Düse 1 überdies derart zusammen, dass die Düse 1 durch Selbsthemmung gegen Herausfallen gesichert ist. Gut zu erkennen ist, dass bei einer auf die Düse 1 in Entnahmerichtung C wirkenden Kraft die Verriegelungselemente 4 gegen die untere Seitenwand der Schlitze 3 gedrückt werden. Wird nun durch entsprechende Ausbildung der Nut in der Düse 1, in welche die Verriegelungselemente 4 eingreifen, dafür gesorgt, dass die Richtung der Kraft auf die genannte Seitenwand innerhalb des Reibungskegels bleibt, dann ist die Bedingung für Selbsthemmung erfüllt. Wirkt aus irgendeinem Grund die Federkraft nicht (z.B. Bruch, Verschmutzung) so wird dennoch eine sichere Arretierung der Düse 1 in der Düsenaufnahme 2 gewährleistet. Selbstverständlich kann die Feder 6 daher gegebenenfalls auch ganz weggelassen werden.

In der Fig. 1 sind weiterhin ein Sprengring 8 gezeigt, welcher die Hülse 5 gegen Herunterfallen sichert, sowie eine Dichtung 9, welche die Düse 1 dicht mit dem Laserbearbeitungskopf verbindet. Die Dichtung 9 wird ihrerseits zwischen einer Mutter 10, welche in die Düsenaufnahme 2 eingeschraubt wird, und einem Absatz in der Düsenaufnahme 2 eingeklemmt. Durch ihre konische Form verbindet die Mutter 10 überdies die Düsenaufnahme 2 (und damit die gesamte Düsenkupplung) mit dem Kopfgrundkörper 11, welcher die weitere Verbindung zum Laserbearbeitungskopf herstellt.

Das Ein- und Auskuppeln der Düse geschieht nun wie folgt:
Beim Einkuppeln wird die Düse 1 entgegen der Entnahmerichtung C, also nach oben, in die Düsenaufnahme 2 gedrückt. Dabei werden auch die Verriegelungselemente 4 nach oben und durch die schräg angeordneten (Führungs)schlitze 3 radial nach aussen gedrückt. Weil die Verriegelungselemente 4 mit der Scheibe 7 in Kontakt stehen, wird bei diesem Vorgang auch die über der Scheibe 7 angeordnete Feder 6 zusammengedrückt. Das Einschieben der Düse 1 erfordert also etwas Kraftaufwand. Sobald die Nut in der Düse 1 auf Höhe der Schlitze 3 ist, rasten die Verriegelungselemente 4 aufgrund der Federkraft ein und arretieren die Düse 1 in der Düsenaufnahme 2. Durch die elastische Dichtung 9 - beispielsweise aus Silikongummi - wird die Düse 1 überdies in die Entnahmerichtung C gedrückt, sodass die Düse 1 spielfrei in der Düsenaufnahme 2 sitzt.

Bei dem beschriebenen Vorgang wurde die Hülse 5 nicht aktiv betätigt, da dies prinzipiell nicht nötig ist. Dennoch kann die Hülse 5 beim Einkuppeln aktiv in die Entriegelrichtung B gedrückt werden, um die Verriegelungselementen 4 in die Entriegelposition zu bewegen und so das Einschieben der Düse 2 zu erleichtern, da diese dann ja nicht mehr gegen eine Federkraft eingeschoben werden muss.

Beim Auskuppeln wird die Hülse 5 jedenfalls in die Entriegelrichtung B, also nach oben, verschoben. Da die Hülse 5 dadurch in Eingriff mit den Verriegelungselementen 4 gebracht werden kann, werden diese ebenfalls nach oben, und weil die (Führungs)schlitze 3 geneigt sind, radial nach aussen verschoben. Über die Scheibe 7 wirkt die Verschiebung auch auf die Feder 6, welche zusammengedrückt wird. Für die Verschiebung der Hülse 5 ist daher eine durch Federkonstante und Verschiebeweg gegebene Kraft erforderlich. Sobald die Hülse 5 weit genug in die Entriegelrichtung B verschoben wurde, geben die Verriegelungselemente 4 die Düse 1 frei, die entweder von selbst heraus fällt, oder beispielsweise durch einen kurzen Druckimpuls eines gegebenenfalls verwendeten Schneidgases oder durch eine Handbewegung zum Herausfallen gebracht werden kann. Denkbar sind natürlich auch Greifer, welche die Düse 1 herausziehen.

An der Fig. 1 ist gut zu erkennen dass die Verschiebung der Verriegelungselemente 4 beim Auskuppeln nicht durch die Düse 2 beziehungsweise die Nut in derselben sondern durch eine Verschiebung der Hülse 5 bewirkt wird.

Im gezeigten Beispiel hat die Hülse 5 etwas Spiel zu den Verriegelungselementen 4, steht also nicht in ständigem Eingriff beziehungsweise Kontakt mit denselben. Durch Verschieben der Hülse 5 kann diese aber in Eingriff mit den Verriegelungselementen 4 gebracht werden und so wie beschrieben das Auskuppeln bewirken. Denkbar ist aber auch, dass die Hülse 5 in ständigem Eingriff, das heisst Kontakt, mit den Verriegelungselementen 4 steht. Zwischen Hülse 5 und den Verriegelungselementen 4 ist im Ruhezustand dann kein Spiel mehr. Dies kann etwa dadurch bewirkt werden, dass oberhalb des Sprengrings 4 noch eine elastische Scheibe angeordnet ist, welche, die Hülse 5 permanent gegen die Verriegelungselemente 4 drückt.

Im gezeigten Beispiel ist die Entriegelrichtung B entgegengesetzt zur Entnahmerichtung C der Düse 1. Denkbar ist jedoch auch, dass die Entriegelrichtung B gleich der Entnahmerichtung C der Düse 1 ist. In diesem Fall wird der Aufbau der Schlitze 3, der Hülse 5, der Feder 6 und der Scheibe 7 einfach an einer horizontalen Achse gespiegelt. Konstruktiv ist dann vorzusehen, dass die Feder 6 gegen eine untere Anlagefläche in der Düsenaufnahme 2 drücken kann. Zu beachten ist weiterhin, dass eine Selbsthemmung durch die nach unten geneigten Schlitze 3 zwar prinzipiell möglich aber schwerer zu realisieren ist. Weiterhin ist möglich, dass dann auch die Hülse 5 beim Einkuppelvorgang aktiv betätigt werden muss.

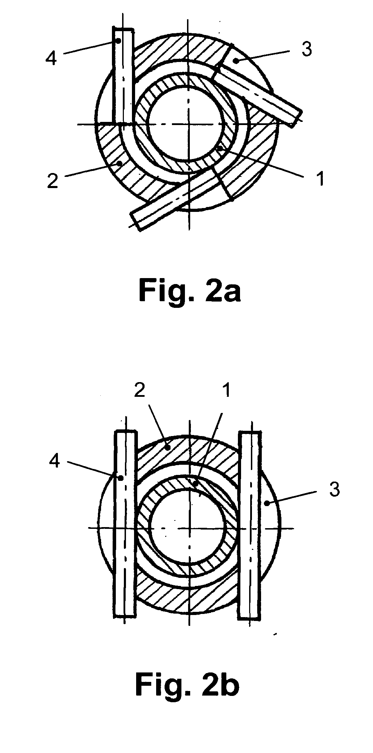

Fig. 2a zeigt nun einen Querschnitt durch die Düse 1 und die Düsenaufnahme 2 einer ersten schematisch dargestellten Ausführungsform. Dabei sind die Schlitze 3 und die Verriegelungselemente 4 um 120° versetzt angeordnet. Gut zu sehen ist, dass die Verriegelungselemente 4 in der Verriegelposition sowohl über die Innenseite als auch über die Aussenseite der Düsenaufnahme 2 hinausragen.

Fig. 2b zeigt nun einen Querschnitt durch die Düse 1 und die Düsenaufnahme 2 einer zweiten schematisch dargestellten Ausführungsform. Dabei sind die Schlitze 3 und die Verriegelungselemente 4 um 180° versetzt angeordnet. Zusätzlich ragen jeweils beide Enden der Verriegelungselemente 4 über die Aussenseite der Düsenaufnahme 2 hinaus.

### Bezugszeichenliste

- 1: Düse
- 2: Düsenaufnahme
- 3: Schlitz
- 4: Verriegelungselement (Bolzen)
- 5: Hülse
- 6: (Druck) Feder
- 7: Scheibe
- 8: Sprengring
- 9: Dichtung
- 10: Mutter
- 11: Kopfgrundkörper
- A: Achse der Düsenaufnahme
- B: Entriegelrichtung
- C: Entnahmerichtung

## Patentansprüche

1. Schneidstrahlmaschine mit einem Bearbeitungskopf und einer auf diesem angeordneten Kupplung für eine Düse (1), umfassend:
- eine rohrförmige Düsenaufnahme (2) mit Schlitzen (3), welche die Aussenseite der Düsenaufnahme (2) mit deren Innenseite, die zur Aufnahme der Düse (1) vorgesehen ist, verbinden,
- in den Schlitzen (3) beweglich gelagerte Verriegelungselemente (4), welche zwischen einer Verriegelposition und einer Entriegelposition verschiebbar sind und in der Verriegelposition über die Innenseite und die Aussenseite der Düsenaufnahme (2) hinausragen,
- eine an der Düsenaufnahme (2) aussen angeordnete Hülse (5), welche mit den Verriegelungselementen (4) in Eingriff steht oder in Eingriff gebracht werden kann,
**dadurch gekennzeichnet,**
**dass** die Schlitzen in Bezug zur Achse (A) der Röhrförmigen Düsenaufnahme schräg orientiert sind,
**dass** die Hülse (5) dazu eingerichtet ist, bei Verschiebung entlang der Achse (A) der Düsenaufnahme (2) in eine Entriegelrichtung (B) eine Verschiebung der Verriegelungselemente (4) nach aussen bezwirkt.

2. Schneidstrahlmaschine nach Anspruch 1, **dadurch gekennzeichnet, dass** die Schlitze (3) von der Innenseite der Düsenaufnahme (2) zu deren Aussenseite in Entriegelrichtung (B) verlaufen.

3. Schneidstrahlmaschine nach Anspruch 1 oder 2, **dadurch** gekennzeichet, dass die Entriegelrichtung (B) entgegengesetzt zur Entnahmerichtung (C) der Düse (1) ist.

4. Schneidstrahlmaschine nach Anspruch 1 oder 2, **dadurch gekennzeichnet, dass** die Entriegelrichtung gleich der Entnahmerichtung (C) der Düse (1) ist.

5. Schneidstrahlmaschine nach einem der Ansprüche 1 bis 4, **dadurch gekennzeichnet, dass** als Verriegelungselemente (4) Bolzen vorgesehen sind.

6. Schneidstrahlmaschine nach einem der Ansprüche 1 bis 5, **dadurch gekennzeichnet, dass** die Verriegelungselemente (4) mittels Feder (6) in Richtung Verriegelungsposition gedrückt werden.

7. Schneidstrahlmaschine nach einem der Ansprüche 1 bis 6, **dadurch gekennzeichnet, dass** die Verriegelungselemente (4) mit den Seitenflächen der Schlitze (3) und einer Nut in der Düse (1) derart zusammenwirken, dass die Düse (1) durch Selbsthemmung gegen Herausfallen gesichert ist.

8. Schneidstrahlmaschine nach einem der vorhergehenden Ansprüche, **dadurch gekennzeichnet, dass** der Düse (1) maschinenseitig ein gummielastischer Feder- und Dichtring (9) zugeordnet ist, der die Düse (1) in verriegeltem Zustand in Entriegelrichtung (C) belastet und gegenüber der Maschine abdichtet und vorzugsweise aus Silikongummi besteht.

9. Schneidstrahlmaschine nach einem der vorhergehenden Ansprüche, **dadurch gekennzeichnet, dass** die Düse (1) an ihrer der Maschine abgewandten Seite Angreifelemente für manuellen oder greifergestützten Transport der Düse aufweist.

10. Schneidstrahlmaschine nach einem der vorhergehenden Ansprüche, **dadurch gekennzeichnet, dass** der Raum zwischen Hülse (5) und Düse (1) mittels Druckleitung druckbeaufachlag- oder evakuierbar ist, um eine automatische Fremdbetätigung der Hülse (5) zu ermöglichen.

## Claims

1. A cutting jet machine with a machining head, and a coupling for a nozzle (1) arranged on the machining head, comprising:
- a tubular nozzle holder (2) with slots (3), which connect the outer face of the nozzle holder (2) with its inner face, which is provided for purposes of holding the nozzle (1),
- locking elements (4) mounted in the slots (3) such that they can move, which can be displaced between a locking position, and an unlocking position, and in the locking position project beyond the inner face and the outer face of the nozzle holder (2),
- a sleeve (5) arranged externally on the nozzle holder (2), which is in engagement, or can be brought into engagement, with the locking elements (4),
**characterised in that** the slots are oriented obliquely with reference to the axis (A) of the tubular nozzle holder,
**in that** the sleeve (5) is configured such that when displaced among the axis (A) of the nozzle holder (2) in an unlocking direction (B) it effects a displacement of the locking elements (4) outwards.

2. The cutting jet machine in accordance with Claim 1,
**characterised in that** the slots (3) run from the inner face of the nozzle holder (2) to its outer face in the unlocking direction (B).

3. The cutting jet machine in accordance with Claim 1 or 2,
**characterised in that** the unlocking direction (B) is opposed to the extraction direction (C) of the nozzle (1).

4. The cutting jet machine in accordance with Claim 1 or 2,
**characterised in that** the unlocking direction is the same as the extraction direction (C) of the nozzle (1).

5. The cutting jet machine in accordance with one of the Claims 1 to 4,
**characterised in that** pins are provided as locking elements (4).

6. The cutting jet machine in accordance with one of the Claims 1 to 5,
**characterised in that** the locking elements (4) are pushed by means of springs (6) in the direction of the locking position.

7. The cutting jet machine in accordance with one of the Claims 1 to 6,
**characterised in that** the locking elements (4). Interact with the side faces of the slots (3) and a groove in the nozzle (1) such that the nozzle (1) is secured by means of an automatic restraint against falling out.

8. The cutting jet machine in accordance with one of the preceding claims,
**characterised in that** on the machine side an elastic rubber spring-and-seal ring (9) is assigned to the nozzle (1), which ring loads the nozzle (1) in the locked state in the unlocking direction (C) and seals the nozzle relative to the machine, and preferably consists of silicon rubber.

9. The cutting jet machine in accordance with one of the preceding claims,
**characterised in that** the nozzle (1) on its side facing away from the machine has engaging elements for manual or gripper-supported transport of the nozzle.

10. The cutting jet machine in accordance with one of the preceding claims,
**characterised in that** the space between sleeve (5) and nozzle (1) can be pressurised or evacuated by means of a pressure line, in order to enable automatic actuation of the sleeve (5) externally.

## Revendications

1. Machine à jet de coupe avec une tête de traitement et un élément d'accouplement disposé sur celle-ci pour une buse (1), comprenant :
- une admission de buse (2) tubulaire, avec des fentes (3) reliant le côté extérieur de l'admission de buse (2) avec le côté intérieur de celle-ci, qui est prévu pour la réception de la buse (1),
- des éléments de verrouillage (4) installés de façon mobile dans les fentes (3), aptes à être déplacés entre une position de verrouillage et une position de déverrouillage, et faisant saillie sur le côté intérieur et le côté extérieur de l'admission de buse (2),
- une douille (5) installée à l'extérieur sur l'admission de buse (2), qui se trouve en prise ou peut se trouver en prise avec les éléments de verrouillage (4),
**caractérisée en ce que**
- les fentes sont orientées en biais par rapport à l'axe (A) de l'admission de buse tubulaire,
- la buse (5) est conçue pour provoquer un déplacement des éléments de verrouillage (4) vers l'extérieur, lors du déplacement le long de l'axe (A) de l'admission de buse (2) dans un sens de déverrouillage (8).

2. Machine à jet de coupe selon la revendication 1, **caractérisée en ce que** les fentes (3) s'étendent du côté intérieur de l'admission de buse (2) vers le côté extérieur de celle-ci, dans le sens de déverrouillage (B).

3. Machine à jet de coupe selon la revendication 1 ou 2, **caractérisée en ce que** le sens de déverrouillage est contraire au sens de retrait (C) de la buse (1).

4. Machine selon la revendication 1 ou 2, **caractérisée en ce que** le sens de déverrouillage est identique au sens de retrait (C) de la buse (1).

5. Machine à jet de coupe selon l'une des revendications 1 à 4, **caractérisée en ce que** des boulons sont prévus en tant qu'éléments de verrouillage (4).

6. Machine à jet de coupe selon l'une des revendications 1 à 5, **caractérisée en ce que** les éléments de verrouillage (4) peuvent être poussés dans le sens de la position de verrouillage au moyen d'un ressort (6).

7. Machine à jet de coupe selon l'une des revendications 1 à 6, **caractérisée en ce que** les éléments de verrouillage (4) coopèrent de telle manière avec les surfaces latérales des fentes (3) et une rainure dans la buse (1), que la buse (1) se bloque automatiquement contre le détachement.

8. Machine à jet de coupe selon l'une des revendications précédentes, **caractérisée en ce que** côté machine, une bague d'étanchéité élastique (9) en caoutchouc est attribuée la buse (1), pour charger la buse (1) dans le sens de déverrouillage à l'état verrouillé et isoler celle-ci par rapport à la machine, tout en étant de préférence constituée de caoutchouc de silicone.

9. Machine à jet de coupe selon l'une des revendications précédentes, **caractérisée en ce que** de son côté détourné de la machine, la douille (1) comporte des éléments de prise, pour transporter la buse manuellement ou à l'aide d'un grappin.

10. Machine à jet de coupe selon l'une des revendications précédentes, **caractérisée en ce que** l'espace entre la douille (5) et une buse (1) peut être évacué mis sous pression, au moyen d'une conduite de refoulement, pour permettre un actionnement extérieur automatique de la douille (5).
